# EUROPÄISCHE PATENTSCHRIFT

(11) **EP 1 576 285 B1**
(45) Veröffentlichungstag und Bekanntmachung des Hinweises auf die Patenterteilung: **28.02.2007**
(21) Anmeldenummer: 03797958.0
(22) Anmeldetag: 17.07.2003
(51) Int. Cl.: F02P 5/152, F02P 5/145

(54) **VERFAHREN ZUR ZÜNDWINKELBESTIMMUNG**
METHOD FOR DETERMINING THE ANGLE OF IGNITION
PROCEDE DE DETERMINATION DE L'ANGLE D'ALLUMAGE

(30) Priorität: 12.12.2002 DE 10257994
(43) Veröffentlichungstag der Anmeldung: 21.09.2005
(73) Patentinhaber: ROBERT BOSCH GMBH, 70442 Stuttgart (DE)
(72) Erfinder: VOLLMER, Martin, 70499 Stuttgart-Weilimdorf (DE); HEINSTEIN, Axel, 71299 Wimsheim (DE); KONRAD, Johann, 71732 Tamm (DE); SAULER, Juergen, 70192 Stuttgart (DE)
(86) Internationale Anmeldenummer: PCT/DE2003/002407
(87) Internationale Veröffentlichungsnummer: WO 2004/053328

(56) Entgegenhaltungen:
- WO-A-02/20964
- US-A- 5 411 000
- US-A- 5 577 476
- US-A- 6 161 523

## Beschreibung

### Stand der Technik

Die Erfindung betrifft ein Verfahren zur Zündwinkelbestimmung für einen Verbrennungsmotor, bei dem ausgehend von der aktuellen Motordrehzahl und Last ein Grundzündwinkel bestimmt wird und bei dem im Rahmen einer nachgeschalteten Klopfregelung eine erste Zündwinkelverstellung nach spät ermittelt wird, wenn ein Klopfen erkannt worden ist.

Bei der Entwicklung von Verbrennungsmotoren gewinnen die Aspekte Treibstoffverbrauch und Abgaswerte zunehmend an Bedeutung. Diese Betriebsparameter können durch unterschiedliche Maßnahmen bzw. Stellgrößen beeinflusst werden, wie z.B. durch Abgasrückführung, Umlegen der Ladungsbewegungsklappe, Verstellen der Nockenwelle, Veränderung des Ventiltriebs und/oder Regelung der Motortemperatur bzw. Regelung der Kühlmitteltemperatur und/oder des Kühlmittelvolumenstroms. All diese Stellgrößen wirken sich auch auf die Klopfgrenze des Motors und somit auf den optimalen Zündwinkel aus.

Daher wird der Grundzündwinkel in der Praxis in mehreren Schritten ermittelt. Anhand der aktuellen Motordrehzahl und Last wird zunächst ein Ausgangszündwinkel bestimmt. In der Regel wird dieser Ausgangszündwinkel aus einem entsprechenden Kennfeld ausgelesen. Zur Ermittlung des Grundzündwinkels, wird dann für jede Stellgröße, d.h. für jede der vorgenannten Funktionalitäten, ein Zündwinkeloffset auf den Ausgangszündwinkel aufaddiert, um den Motor unter allen Betriebsbedingungen mit einem möglichst optimalen Wirkungsgrad betreiben zu können. Die Zündwinkeloffsets für die einzelnen Stellgrößen werden meist ebenfalls an Hand von entsprechenden Kennfeldern bestimmt. Der so ermittelte Grundzündwinkel bildet den Ausgangspunkt für eine nachgeschaltete zylinderindividuelle Klopfregelung, durch die eine Spätverstellung des Grundzündwinkels bewirkt werden kann, wenn ein Klopfen erkannt worden ist.

Das voranstehend beschriebene Verfahren erweist sich in der Praxis in mehrerlei Hinsicht als problematisch. Bei Stellgrößen, die anhand eines Modells berechnet werden, führen dynamische Änderungen häufig zu einer fehlerhaften Bestimmung der Stellgröße. Dies hat eine fehlerhafte Adressierung des entsprechenden Kennfeldes für den Zündwinkeloffset zur Folge und resultiert in einer suboptimalen Bestimmung des Grundzündwinkels. Als Beispiele für Stellgrößen, die anhand eines Modells berechnet werden können, seien hier die Abgasrückführungsrate und die Motortemperatur genannt. Die Modellrechnungen zur Bestimmung der Motortemperatur bei einem Lastwechsel oder einer Änderung des Kühlmittelvolumenstroms und/oder der Kühlmitteltemperatur erweisen sich häufig als vergleichsweise ungenau. Eine Ursache dafür sind die langsamen Einschwingvorgänge bei Temperaturänderungen. Außerdem haben Änderungen des Kühlmittelvolumenstroms eine stark nichtlineare Auswirkung auf die Bauteil- bzw. Motortemperatur. Die bekannte Zündwinkelvorsteuerung kann diese Umstände nicht berücksichtigen.

Wie bereits erwähnt, wird bei der bekannten Zündwinkelvorsteuerung für jede Stellgröße ein eigenes Kennfeld für den entsprechenden Zündwinkeloffset benötigt. Dementsprechend steigt der Bedatungs- und Speicheraufwand mit der Anzahl der zu berücksichtigenden Stellgrößen. Die Bedatung der Kennfelder ist schon allein aufgrund der Datenmenge fehleranfällig. Zudem ist die Bedeutung ein einigen Fällen auch sehr zeitaufwendig, wie zum Beispiel im Falle des Zündwinkeloffsets, der sich aufgrund von dynamischen Änderungen der Motortemperatur bzw. des Kühlmittelvolumenstroms und der Kühlmitteltemperatur ergibt.

Aus der WO 02 20964 A und der US 54 11 000 A sind bereits Verfahren zur Zündwinkelbestimmung bekannt.

### Vorteile der Erfindung

Mit der vorliegenden Erfindung wird ein Verfahren zur Zündwinkelbestimmung vorgeschlagen, bei dem Änderungen von Stellgrößen, die sich auf die Klopfgrenze und damit auf den optimalen Zündwinkel auswirken, dynamisch berücksichtigt werden.

Dies wird erfindungsgemäß dadurch erreicht, dass im Rahmen einer Klopfgrenzenregelung eine zweite Zündwinkelverstellung ermittelt wird, wenn sich mindestens eine die Klopfgrenze beeinflussende Stellgröße verändert, wobei die Art der zweiten Zündwinkelverstellung, d.h. nach früh oder nach spät, von der Stellgröße und deren Veränderung abhängt.

Die Klopfgrenzenregelung im Rahmen des erfindungsgemäßen Verfahrens wird durch Veränderungen der zu berücksichtigenden Stellgrößen ausgelöst. Auf den absoluten Wert der Stellgröße kommt es hierbei nicht an, so dass sich eine fehlerhaft ermittelte Stellgröße so lange nicht negativ auf die erfindungsgemäße Zündwinkelbestimmung auswirkt, solange zumindest deren Veränderung richtig erfasst wird. Außerdem werden im Rahmen des erfindungsgemäßen Verfahrens keine Kennfelder für die Bestimmung von stellgrößenabhängigen Zündwinkeloffsets benötigt. Dementsprechend entfallen hier sowohl der mit der Bedatung derartiger Kennfelder verbundene Zeit- und Speicheraufwand als auch das durch die Bedatung dieser Kennfelder bedingte Fehlerrisiko. Der Motor wird mit Hilfe der Klopfgrenzenregelung immer mit einem optimalen Zündwinkel - entweder an der Klopfgrenze oder mit einem durch die Momentenstruktur vorgegebenen Zündwinkel - betrieben.

Im Rahmen des erfindungsgemäßen Verfahrens wird eine klare Trennung zwischen der bekannten Klopfregelung und der erfindungsgemäßen Klopfgrenzenregelung realisiert. Dadurch bleibt die Funktionalität der Klopfregelung in vollem Umfang erhalten. Abgesehen von einigen zusätzlichen Freigabe- bzw. Sperrbedingungen, auf die im Rahmen eines nachfolgend erläuterten Ausführungsbeispiels nochmals Bezug genommen wird, können die einzelnen Funktionen der bekannten Klopfregelung unverändert übernommen werden. Insbesondere eine Stationäradaption der Klopfregelung, wie sie bei schnellen Änderung des Motor-Betriebspunktes vorgenommen wird, kann weiterhin unbeeinträchtigt durchgeführt werden.

Grundsätzlich gibt es verschiedene Möglichkeiten für die Realisierung des erfindungsgemäßen Verfahrens und insbesondere für die Realisierung der Klopfgrenzenregelung. Diese kann beispielsweise wie die Klopfregelung zylinderindividuell vorgenommen werden. In einer vorteilhaften Variante des erfindungsgemäßen Verfahrens wird die Klopfgrenzenregelung jedoch für alle Zylinder des Verbrennungsmotors gleichzeitig und in gleicher Weise durchgeführt. Die daraus resultierende globale Verstellung der Zündwinkel ermöglicht eine besonders schnelle und effiziente Anpassung der Zündwinkel an eine veränderte Klopfgrenze. Eine zylinderindividuelle Regelung des Zündwinkels erfolgt dabei mit Hilfe der Klopfregelung, die parallel zur Klopfgrenzenregelung durchgeführt wird. In diesem Zusammenhang sei noch erwähnt, dass der Zündwinkel im Rahmen der Klopfgrenzenregelung sowohl nach spät als auch nach früh verändert werden kann, während die Klopfregelung immer nur eine Spätverstellung des Zündwinkels bewirken kann.

Beim Betrieb eines Kfz können Situationen auftreten, in denen der Zündwinkel ausschließlich durch die Momentenstruktur des Motors vorgegeben wird, also unabhängig von der Klopfregelung und einer Klopfgrenzenregelung, wie sie mit der vorliegenden Erfindung vorgeschlagen wird. Beispielhaft sei hier das Einschalten des Klimakompressors genannt. Um in diesem Falle ein Motorruckeln zu vermeiden, kann die Momentenstruktur des Motors einen Momentenvorhalt aufbauen. Dabei werden die Zündwinkel nach spät gezogen. Während des Momenteneingriffs kommen weder die im Rahmen der Klopfregelung ermittelten ersten Zündwinkelverstellungen zur Ausgabe noch die im Rahmen der Klopfgrenzenregelung ermittelte zweite Zündwinkelverstellung, so dass die Klopfgrenzenregelung während des Momenteneingriffs unterbrochen werden muss. Der Momentenvorhalt wird nach einem solchen Momenteneingriff wieder abgebaut, indem die Zündwinkel beispielsweise in einer Rampe an die Klopfgrenze herangefahren werden. Zur Ermittlung des entsprechenden Zündwinkels wird ausgehend von der aktuellen Motordrehzahl und Last zunächst ein Grundzündwinkel bestimmt, auf den dann eine Zündwinkelverstellung zur Klopfgrenzenregelung aufaddiert wird. Dabei kann es sich um die Zündwinkelverstellung handeln, die vor dem Momenteneingriff, d.h. vor der Unterbrechung der Klopfgrenzenregelung, ermittelt worden ist. Der so ermittelte Zündwinkel stellt aber nur dann eine gute Annäherung an die Klopfgrenze dar, wenn sich keine der Stellgrößen, die die Klopfgrenze beeinflussen, während des Momenteneingriffs verändert hat.

Eine vorteilhafte Variante des erfindungsgemäßen Verfahrens betrifft den Fall der Zündwinkeleinstellung nach einem Momenteneingriff, wobei sich mindestens eine die Klopfgrenze beeinflussende Stellgröße während des Momenteneingriffs verändert hat. Erfindungsgemäß wird vorgeschlagen, den Wert für die Zündwinkelverstellung zur Klopfgrenzenregelung aus einem Kennfeld auszulesen, in dem Werte für diese Zündwinkelverstellung als Funktion der Motordrehzahl, der Last und der veränderten Stellgröße abgelegt sind. Auf diese Weise können bei der Zündwinkeleinstellung nach einem Momenteneingriff auch Änderungen der Stellgrößen während des Momenteneingriffs berücksichtigt werden, obwohl die Klopfgrenzenregelung während des Momenteneingriffs unterbrochen war.

Die Werte eines solchen Kennfeldes können in vorteilhafter Weise adaptiv während des normalen Betriebs der Klopfgrenzenregelung ermittelt werden. Dazu müssen lediglich einmal Startwerte für ein Adaptionskennfeld ermittelt werden, das dann als Ausgangskennfeld für alle Motoren eines Typs verwendet werden kann.

### Zeichnungen

Wie bereits voranstehend erörtert, gibt es verschiedene Möglichkeiten, die Lehre der vorliegenden Erfindung in vorteilhafter Weise auszugestalten und weiterzubilden. Dazu wird einerseits auf die dem Patentanspruch 1 nachgeordneten Patentansprüche und andererseits auf die nachfolgende Beschreibung eines Ausführungsbeispiels der Erfindung anhand der Zeichnungen verwiesen.
- Fig. 1: zeigt ein Blockschaltbild zur Erläuterung des erfindungsgemäßen Verfahrens zur Zündwinkeleinstellung während des normalen Motorbetriebs und
- Fig. 2: zeigt ein Blockschaltbild für das Beschreiben eines Adaptionskennfeldes für die Klopfgrenzenregelung einerseits und für das Auslesen von Werten aus diesem Adaptionskennfeld andererseits.

### Beschreibung des Ausführungsbeispiels

Entsprechend dem erfindungsgemäßen Verfahren zur Zündwinkelbestimmung für einen Verbrennungsmotor wird ausgehend von der aktuellen Motordrehzahl und Last ein Grundzündwinkel 1 bestimmt. Die Bestimmung des Grundzündwinkels 1 kann beispielsweise mit Hilfe eines entsprechenden Kennfeldes erfolgen. Auf diesen Grundzündwinkel 1 wird dann eine erste Zündwinkelverstellung 2 aufaddiert, die im Rahmen einer Klopfregelung 3 zylinderindividuell ermittelt wird, wenn ein Klopfen für einen Zylinder des Verbrennungsmotors erkannt worden ist. Die Klopfregelung 3 kann ausschließlich eine Spätverstellung des Grundzündwinkels 1 bewirken. Erfindungsgemäß wird außerdem im Rahmen einer Klopfgrenzenregelung 4 noch eine zweite Zündwinkelverstellung 5 ermittelt, wenn sich mindestens eine Stellgröße verändert, die die Klopfgrenze beeinflusst.

Die Klopfgrenzenregelung 4 kann beispielsweise durch eine Änderung der Abgasrückführungsrate, durch eine Verstellung der Nockenwelle, durch das Öffnen bzw. Schließen der Ladungsbewegungsklappe durch eine Veränderung des Ventiltriebs oder auch durch eine Veränderung der Motortemperatur bzw. eine Veränderung der Kühlmitteltemperatur oder des Kühlmittelvolumenstroms aktiviert werden. Mit Hilfe der Klopfgrenzenregelung 4 werden die Zündwinkel sehr schnell an die veränderte Klopfgrenze angepasst. In einer vorteilhaften Variante des erfindungsgemäßen Verfahrens werden die Zündwinkel dazu global, d.h. für alle Zylinder gleichzeitig und in gleicher Weise, verstellt. Im Rahmen der Klopfgrenzenregelung 4 wird hier also nur ein Wert für die Zündwinkelverstellung 5 bestimmt.

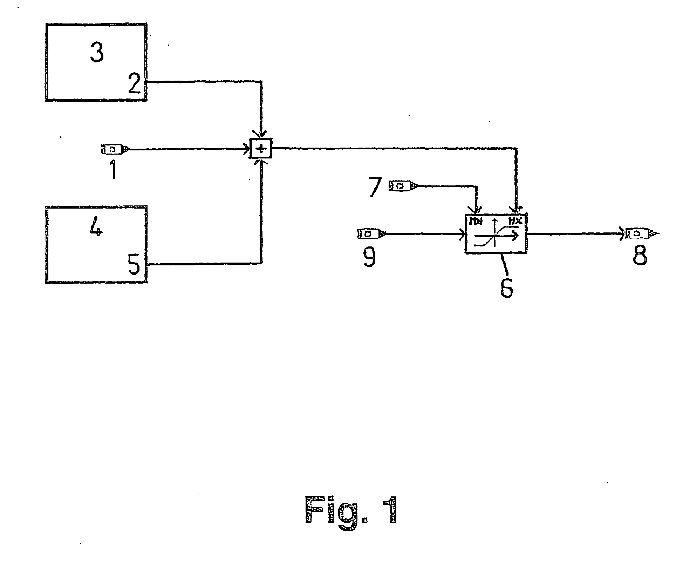

Bei der in Fig. 1 dargestellten Verfahrensvariante erfolgt die Klopfgrenzenregelung 4 parallel zur Klopfregelung 3, so dass die Funktionalität der Klopfregelung 3 unabhängig von der Klopfgrenzenregelung 4 ist.

Ob die im Rahmen der Klopfgrenzenregelung 4 bestimmte Zündwinkelverstellung 5 zu einer Frühverstellung oder zu einer Spätverstellung des Grundzündwinkels 1 führt, hängt von der Stellgröße ab, durch die die Klopfgrenzenregelung 4 ausgelöst worden ist, und von der Art der Veränderung dieser Stellgröße.

Bei einer Erhöhung der Abgasrückführungsrate oder auch bei einer Verringerung der Motortemperatur bewirkt die Klopfgrenzenregelung 4 so lange eine globale Frühverstellung des Grundzündwinkels 1, bis die Klopfregelung 3 ein Klopfen erkannt hat. In diesem Fall bleibt die Klopfregelung 3 aktiv und bewirkt, dass der Zündwinkel für den klopfenden Zylinder nach spät gezogen wird. Ändert sich die verursachende Stellgröße weiter, d.h. erhöht sich die Abgasrückführungsrate weiter oder verringert sich die Motortemperatur weiter, indem sich der Kühlmittelvolumenstrom erhöht oder die Kühlmitteltemperatur verringert, so wird der Zündwinkel nach einer applizierbaren Zeit weiter global nach früh verstellt, bis ein Klopfen erkannt wird.

Wenn sich die Abgasrückführungsrate verringert oder wenn sich die Motortemperatur erhöht, bewirkt die Klopfgrenzenregelung 4 eine globale Spätverstellung des Grundzündwinkels 1 pro erkanntem Klopfen. In diesem Fall sind sowohl die zylinderindividuelle Klopfregelung 3 als auch eine Stationäradaption des Zündwinkels gesperrt. Durch ein gleichzeitiges Herabsetzen der Klopferkennungsgrenze wird die Spätverstellung des Zündwinkels schon bei sehr kleinen Klopfern ausgelöst.

Die Summe aus Grundzündwinkel 1, erster Zündwinkelverstellung 2 und zweiter Zündwinkelverstellung 5 bildet den Maximalwert eines Begrenzers 6, während der spätest mögliche Zündwinkel 7 als Minimalwert des Begrenzers 6 vorgegeben wird. Mit Hilfe des Begrenzers 6 wird ein Ist-Zündwinkel 8 ermittelt, indem der Wertebereich eines Soll-Zündwinkels 9 begrenzt wird.

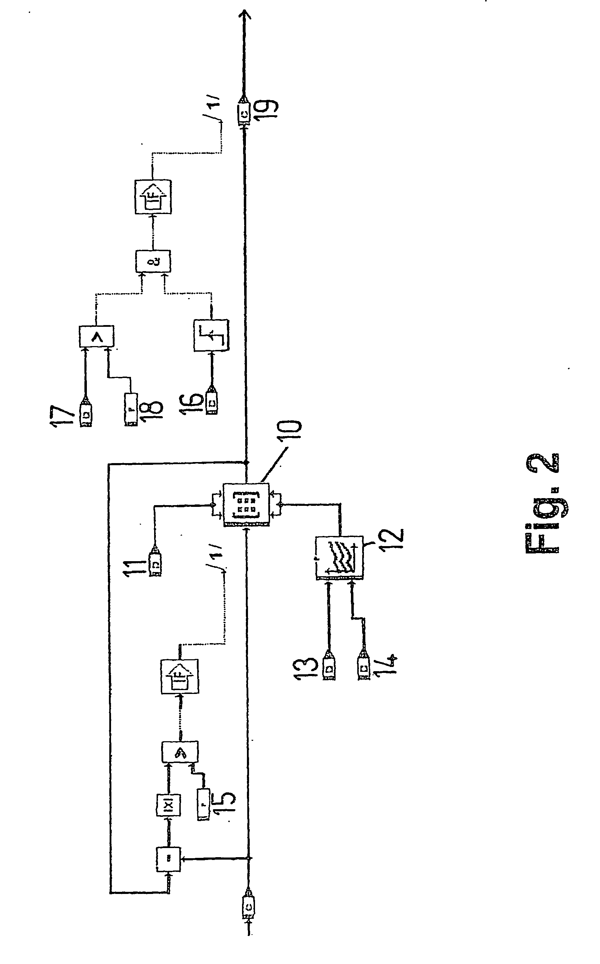

Das in Fig. 2 dargestellte Blockschaltbild betrifft die Bestimmung der Zündwinkel entsprechend dem erfindungsgemäßen Verfahren nach einem Momenteneingriff. Bei einem Momenteneingriff werden die Zündwinkel durch die Momentenstruktur des Motors vorgegeben. Die Klopfgrenzenregelung wird dabei unterbrochen. Wie in Verbindung mit Fig. 1 erläutert, wird auch nach einem Momenteneingriff ein Grundzündwinkel anhand der aktuellen Motordrehzahl und Last bestimmt. Auf diesen wird dann eine Zündwinkelverstellung aufaddiert, durch die den Einflüssen einer oder auch mehrerer Stellgrößen auf die Klopfgrenze Rechnung getragen werden soll. Beim normalen Motorbetrieb wird diese Zündwinkelverstellung im Rahmen der Klopfgrenzenregelung ermittelt, die allerdings immer nur bei einer Veränderung einer oder mehrerer Stellgrößen aktiviert wird. Nur wenn sich während des Momenteneingriffs keine der Stellgrößen verändert hat, kann die Klopfgrenze mit Hilfe des Werts für die Zündwinkelverstellung, der vor der Unterbrechung der Klopfgrenzenregelung ermittelt worden ist, gut angenähert werden. Andernfalls ist der ausgegebene Zündwinkel entweder zu früh, was zu Klopfern führt, oder zu spät, was in einem Wirkungsgradverlust resultiert.

In einer vorteilhaften Variante des erfindungsgemäßen Verfahrens wird der Wert für die Zündwinkelverstellung zur Klopfgrenzenregelung aus einem Kennfeld ausgelesen, wenn sich während des Momenteneingriffs mindestens eine die Klopfgrenze beeinflussende Stellgröße verändert hat. In diesem Kennfeld sind Werte für die Zündwinkelverstellung als Funktion der Motordrehzahl, der Last und der veränderten Stellgröße abgelegt.

Im rechten Teil des in Fig. 2 dargestellten Blockschaltbildes ist die Bedingung für das Auslesen eines Wertes aus einem solchen Kennfeld 10 dargestellt. Der linke Teil des Blockschaltbildes betrifft die Bedatung dieses Kennfeldes 10, die hier adaptiv während des normalen Betriebs der Klopfgrenzenregelung erfolgt. Deshalb wird das Kennfeld 10 im Folgenden stets als Adaptionskennfeld bezeichnet.

Die Adressierung der Werte des Adaptionskennfeldes 10 erfolgt sowohl beim Beschreiben als auch beim Auslesen über die Stellgröße, hier die Abgasrückführungsrate 11, und über Stützstellen 12 in Abhängigkeit von Motordrehzahl 13 und Last 14. Während des normalen Motorbetriebs wird jeder Wert der Zündwinkelverstellung, der im Rahmen der Klopfgrenzenregelung ermittelt worden ist, mit dem entsprechenden Wert des Adaptionskennfeldes 10 verglichen. Nur wenn die Abweichung zwischen diesen beiden Werten eine applizierbare Schwelle 15 überschreitet, wird der entsprechende Wert des Adaptionskennfeldes 10 mit dem aktuell ermittelten Wert für die Zündwinkelverstellung überschrieben.

Wie bereits erwähnt, müssen zwei Bedingungen für das Auslesen eines Wertes aus dem Adaptionskennfeld 10 erfüllt sein. Zum einen muss der Momenteneingriff, der die Unterbrechung der Klopfgrenzenregelung verursacht hat, abgeschlossen sein, was bei 16 geprüft wird. Zum anderen muss sich im hier dargestellten Ausführungsbeispiel die Abgasrückführungsrate während des Momenteneingriffs signifikant verändert haben. Dazu wird die Differenz zwischen der Abgasrückführungsrate vor dem Momenteneingriff und der Abgasrückführungsrate nach dem Momenteneingriff 17 mit einem vorgegebenen Schwellwert 18 verglichen. Nur wenn beide Bedingungen erfüllt sind, wird eine adaptierte Zündwinkelverstellung 19 aus dem Adaptionskennfeld 10 ausgelesen. Danach kann die Zündwinkelverstellung wieder mit hinreichender Genauigkeit im Rahmen der Klopfgrenzenregelung bestimmt werden.

## Patentansprüche

1. Verfahren zur Zündwinkelbestimmung für einen Verbrennungsmotor, bei dem ausgehend von der aktuellen Motordrehzahl und Last ein Grundzündwinkel (1) bestimmt wird und bei dem im Rahmen einer nachgeschalteten Klopfregelung (3) eine erste Zündwinkelverstellung (2) nach spät ermittelt wird, wenn ein Klopfen erkannt worden ist, **dadurch gekennzeichnet, dass** im Rahmen einer Klopfgrenzenregelung (4) eine zweite Zündwinkelverstellung (5) ermittelt wird, wenn sich mindestens eine die Klopfgrenze beeinflussende Stellgröße verändert, wobei die Art der zweiten Zündwinkelverstellung (5), das heißt nach früh oder nach spät, von der Stellgröße und deren Veränderung abhängt, und wobei der Grundzündwinkel (1), die erste und die zweite Zündwinkelverstellung (2, 5) addiert werden, um einen Maximalwert für die Verstellung des Zündwinkels zu bilden.

2. Verfahren nach Anspruch 1, **dadurch gekennzeichnet, dass** die Klopfgrenzenregelung (4) für alle Zylinder des Verbrennungsmotors gleichzeitig und in gleicher Weise durchgeführt wird.

3. Verfahren nach einem der Ansprüche 1 oder 2, **dadurch gekennzeichnet, dass** die Klopfgrenzenregelung (4) durch eine Änderung der Abgasrückführungsrate ausgelöst wird.

4. Verfahren nach einem der Ansprüche 1 bis 3, **dadurch gekennzeichnet, dass** die Klopfgrenzenregelung (4) durch eine Verstellung der Nockenwelle ausgelöst wird.

5. Verfahren nach einem der Ansprüche 1 bis 4, **dadurch gekennzeichnet, dass** die Klopfgrenzenregelung (4) durch das Öffnen bzw. Schließen der Ladungsbewegungsklappe ausgelöst wird.

6. Verfahren nach einem der Ansprüche 1 bis 5, **dadurch gekennzeichnet, dass** die Klopfgrenzenregelung (4) durch eine Veränderung des Ventiltriebs ausgelöst wird.

7. Verfahren nach einem der Ansprüche 1 bis 6, **dadurch gekennzeichnet, dass** die Klopfgrenzenregelung (4) durch eine Veränderung der Motortemperatur bzw. durch eine Veränderung der Kühlmitteltemperatur und/oder des Volumenstroms des Kühlmittels ausgelöst wird.

8. Verfahren nach einem der Ansprüche 1 bis 7, wobei sich die Stellgröße so verändert, dass die Klopfgrenzenregelung (4) den Grundzündwinkel (1) nach früh verstellt, **dadurch gekennzeichnet, dass** die Klopfregelung (3) aktiv bleibt und dass die Klopfgrenzenregelung (4) den Grundzündwinkel (1) nur so lange nach früh verstellt, bis die Klopfregelung (3) einen Klopfer erkannt hat.

9. Verfahren nach einem der Ansprüche 1 bis 7, wobei sich die Stellgröße so verändert, dass die Klopfgrenzenregelung (4) den Grundzündwinkel (1) nach spät verstellt, **dadurch gekennzeichnet, dass** die Klopfgrenzenregelung (4) den Grundzündwinkel (1) bei jedem erkannten Klopfer nach spät verstellt und dass der Zündwinkel während der Klopfgrenzenregelung (4) weder durch die Klopfregelung (3) noch durch eine Stationäradaption verändert wird.

10. Verfahren nach Anspruch 9, **dadurch gekennzeichnet, dass** die Klopferkennungsgrenze herabgesetzt wird.

11. Verfahren nach Anspruch 8, **dadurch gekennzeichnet, dass** im Rahmen der Klopfgrenzenregelung (4) eine Frühverstellung ermittelt wird, wenn sich die Abgasrückführungsrate erhöht und/oder wenn sich die Motortemperatur verringert.

12. Verfahren nach einem der Ansprüche 9 oder 10, **dadurch gekennzeichnet, dass** im Rahmen der Klopfgrenzenregelung (4) eine Spätverstellung ermittelt wird, wenn sich die Abgasrückführungsrate verringert und/oder wenn sich die Motortemperatur erhöht.

13. Verfahren zur Zündwinkeleinstellung nach einem Momenteneingriff, bei dem der Zündwinkel auf der Basis der Momentenstruktur des Motors bestimmt worden ist und die Klopfgrenzenregelung (4) unterbrochen worden ist, wobei sich mindestens eine die Klopfgrenze beeinflussende Stellgröße während des Momenteneingriffs verändert hat, nach einem der Ansprüche 1 bis 12,
**dadurch gekennzeichnet, dass** ein Wert für die zweite Zündwinkelverstellung (19) aus einem Kennfeld (10) ausgelesen wird, in dem Werte für die zweite Zündwinkelverstellung als Funktion der Motordrehzahl (13), der Last (14) und der veränderten Stellgröße (11) abgelegt sind.

14. Verfahren nach Anspruch 13, **dadurch gekennzeichnet, dass** die Werte des Kennfeldes adaptiv während des normalen Betriebs der Klopfgrenzenregelung (4) ermittelt worden sind.

## Claims

1. Method for determining the angle of ignition of an internal combustion engine, in which a basic ignition angle (1) is determined on the basis of the current engine speed and load, and in which a first ignition angle adjustment (2) in the retarded direction is determined within the scope of a downstream knock control means (3) if knocking has been detected, **characterized in that** within the scope of a knocking limit control process (4) a second ignition angle adjustment (5) is determined if at least one manipulated variable which influences the knocking limit changes, the type of the second ignition angle adjustment (5), that is to say in the early direction or in the retarded direction, depending on the manipulated variable and its change, and the basic ignition angle (1), and the first and second ignition angle adjustments (2, 5) being added in order to form a maximum value for the adjustment of the ignition angle.

2. Method according to Claim 1, **characterized in that** the knocking limit control process (4) is carried out simultaneously and in the same way for all the cylinders of the internal combustion engine.

3. Method according to one of Claims 1 or 2, **characterized in that** the knocking limit control process (4) is triggered by changing the exhaust gas recirculation rate.

4. Method according to one of Claims 1 to 3, **characterized in that** the knocking limit control process (4) is triggered by adjusting the camshaft.

5. Method according to one of Claims 1 to 4, **characterized in that** the knocking limit control process (4) is triggered by opening and closing the charge movement flap.

6. Method according to one of Claims 1 to 5, **characterized in that** the knocking limit control process (4) is triggered by changing the valve drive.

7. Method according to one of Claims 1 to 6, **characterized in that** the knocking limit control process (4) is triggered by changing the engine temperature or by changing the coolant temperature and/or the volume flow of the coolant.

8. Method according to one of Claims 1 to 7, the manipulated variable changing in such a way that the knocking limit control process (4) adjusts the basic ignition angle (1) in the early direction, **characterized in that** the knock control means (3) remains active, and **in that** the knocking limit control process (4) adjusts the basic ignition angle (1) in the early direction only until the knock control means (3) has detected knocking.

9. Method according to one of Claims 1 to 7, the manipulated variable changing in such a way that the knocking limit control process (4) adjusts the basic ignition angle (1) in the retarded direction, **characterized in that** the knocking limit control process (4) adjusts the basic ignition angle (1) in the retarded direction whenever knocking is detected, and **in that** the ignition angle is not changed either by the knock control means (3) or by a steady-state adaptation during the knocking limit control process (4).

10. Method according to Claim 9, **characterized in that** the knock detection limit is lowered.

11. Method according to Claim 8, **characterized in that** an adjustment in the early direction is determined within the scope of the knocking limit control process (4) if the exhaust gas recirculation rate is increased and/or if the engine temperature is reduced.

12. Method according to Claims 9 or 10, **characterized in that** an adjustment in the retarded direction is determined within the scope of the knocking limit control process (4) if the exhaust gas recirculation rate is reduced and/or if the engine temperature is increased.

13. Method for adjusting an ignition angle after a torque intervention in which the ignition angle has been determined on the basis of the torque structure of the engine and the knocking limit control process (4) has been interrupted, at least one manipulated variable which influences the knocking limit having changed during the torque intervention, according to one of Claims 1 to 12, **characterized in that** a value for the second ignition angle adjustment (19) is read out of a characteristic diagram (10) in which values for the second ignition angle adjustment are stored as a function of the engine speed (13), the load (14) and the changed manipulated variable (11).

14. Method according to Claim 13, **characterized in that** the values of the characteristic diagram have been determined adaptively during the normal operation of the knocking limit control process (4).

## Revendications

1. Procédé de détermination de l'angle d'allumage d'un moteur à combustion selon lequel, partant de la vitesse de rotation actuelle du moteur et de la charge, on définit un angle d'allumage de base (1) et dans le cadre d'une régulation de cliquetis (3), en aval, on détermine un premier réglage d'angle d'allumage (2) dans le sens du retard lorsqu'on détecte du cliquetis,
**caractérisé en ce que**
dans le cadre d'une régulation de limite de cliquetis (4) on détermine un second réglage d'angle d'allumage (5) si au moins une grandeur de réglage influençant la limite de cliquetis change,
la nature du second réglage d'angle d'allumage (5), c'est-à-dire dans le sens de l'avance ou du retard, dépend de la grandeur de réglage et de sa variation, et
on additionne l'angle d'allumage de base (1) et le premier et le second réglage d'angle d'allumage (2, 5) pour former une valeur maximale pour le réglage de l'angle d'allumage.

2. Procédé selon la revendication 1,
**caractérisé en ce qu'**
on effectue la régulation de la limite de cliquetis (4) pour tous les cylindres du moteur à combustion, simultanément et de la même manière.

3. Procédé selon l'une des revendications 1 ou 2,
**caractérisé en ce qu'**
on déclenche la régulation de la limite de cliquetis (4) par une variation du coefficient de recyclage des gaz d'échappement.

4. Procédé selon l'une des revendications 1 à 3,
**caractérisé en ce qu'**
on déclenche la régulation de la limite de cliquetis (4) par un réglage de l'arbre à cames.

5. Procédé selon l'une des revendications 1 à 4,
**caractérisé en ce qu'**
on déclenche la régulation de la limite de cliquetis (4) par l'ouverture ou la fermeture du volet de déplacement de charge.

6. Procédé selon l'une des revendications 1 à 5,
**caractérisé en ce qu'**
on déclenche la régulation de limite de cliquetis (4) par une variation de l'entraînement des soupapes.

7. Procédé selon l'une des revendications 1 à 6,
**caractérisé en ce qu'**
on déclenche la régulation de la limite de cliquetis (4) par une variation de la température du moteur ou par une variation de la température de l'agent de refroidissement et/ou du débit volumique d'agent de refroidissement.

8. Procédé selon l'une des revendications 1 à 7,
selon lequel
la grandeur de réglage varie de façon que la régulation de la limite de cliquetis (4) déplace l'angle d'allumage de base (1) dans le sens de l'avance,
**caractérisé en ce que**
la régulation de cliquetis (3) reste activée et
la régulation de la limite de cliquetis (4) règle l'angle d'allumage de base (1) dans le sens de l'avance jusqu'à ce que la régulation de cliquetis (3) détecte du cliquetis.

9. Procédé selon l'une des revendications 1 à 7,
selon lequel
la grandeur de réglage varie de façon que la régulation de la limite de cliquetis (4) déplace l'angle d'allumage de base (1) dans le sens du retard,
**caractérisé en ce que**
la régulation de la limite de cliquetis (4) déplace l'angle d'allumage de base (1) dans le sens du retard pour toute détection de cliquetis et pendant la régulation de l'angle de cliquetis (4), l'angle d'allumage n'est modifié ni par la régulation de cliquetis (3) ni par une adaptation stationnaire.

10. Procédé selon la revendication 9,
**caractérisé en ce qu'**
on abaisse la limite de détection de cliquetis.

11. Procédé selon la revendication 8,
**caractérisé en ce que**
dans le cadre de la régulation de la limite de cliquetis (4) on détermine un réglage dans le sens de l'avance si le coefficient de recyclage des gaz d'échappement augmente et/ ou si la température du moteur diminue.

12. Procédé selon l'une des revendications 9 ou 10,
**caractérisé en ce que**
dans le cadre de la régulation de la limite de cliquetis (4) on détermine un réglage dans le sens du retard si le coefficient de recyclage des gaz d'échappement diminue et/ ou si la température du moteur augmente.

13. Procédé de réglage de l'angle d'allumage après une action momentanée selon lequel l'angle d'allumage a été déterminé sur la base de la structure momentanée du moteur et la régulation de cliquetis (4) a été coupée, au moins une grandeur de réglage influençant la limite de cliquetis ayant changé pendant l'action momentanée selon l'une des revendications 1 à 12,
**caractérisé en ce qu'**
on extrait une valeur pour le second réglage d'angle d'allumage (19) à partir d'un champ de caractéristiques (10) contenant les valeurs pour le second réglage de l'angle d'allumage comme fonction de la vitesse de rotation (13) du moteur, de sa charge (14) et de la grandeur de réglage (11), modifiée.

14. Procédé selon la revendication 13,
**caractérisé en ce qu'**
on a déterminé les valeurs du champ de caractéristiques de manière adaptative pendant le fonctionnement normal de la régulation de limite de cliquetis.
